(19) Europäisches Patentamt
European Patent Office
Office européen des brevets

(11) EP 3 705 509 A1

(12) **EUROPEAN PATENT APPLICATION**

(43) Date of publication:
**09.09.2020 Bulletin 2020/37**

(21) Application number: **20160802.3**

(22) Date of filing: **03.03.2020**

(51) Int Cl.:
*C08J 3/14* (2006.01)
*C08K 3/36* (2006.01)
*C08K 5/01* (2006.01)
*C08K 5/05* (2006.01)
*C08K 5/06* (2006.01)
*C08K 5/101* (2006.01)
*C08K 5/13* (2006.01)
*C09D 5/03* (2006.01)
*C09D 7/61* (2018.01)
*C09D 7/63* (2018.01)
*C09D 167/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.03.2019 US 201916292247**

(71) Applicant: **Xerox Corporation**
**Webster, NY 14580 (US)**

(72) Inventors:
- **FARRUGIA, Valerie**
  **Oakville, Ontario L6H 7V8 (CA)**
- **GARDNER, Sandra**
  **Oakville, Ontario L6H 7K7 (CA)**
- **BIRAU, Mihaela Maria**
  **Hamilton, Ontario L9C 5J6 (CA)**

(74) Representative: **Gill Jennings & Every LLP**
**JWF**
**The Broadgate Tower**
**20 Primrose Street**
**London EC2A 2ES (GB)**

# (54) ESSENTIAL OIL MICROPARTICLES FOR POWDER COATING APPLICATIONS

(57) A composition having spherical microparticles composed primarily of polyester and one or more essential oils for use in electrostatic powder coating applications. The particles are produced by precipitation under shear stress from a solution containing the essential oils and a polyester resin.

Figure 1

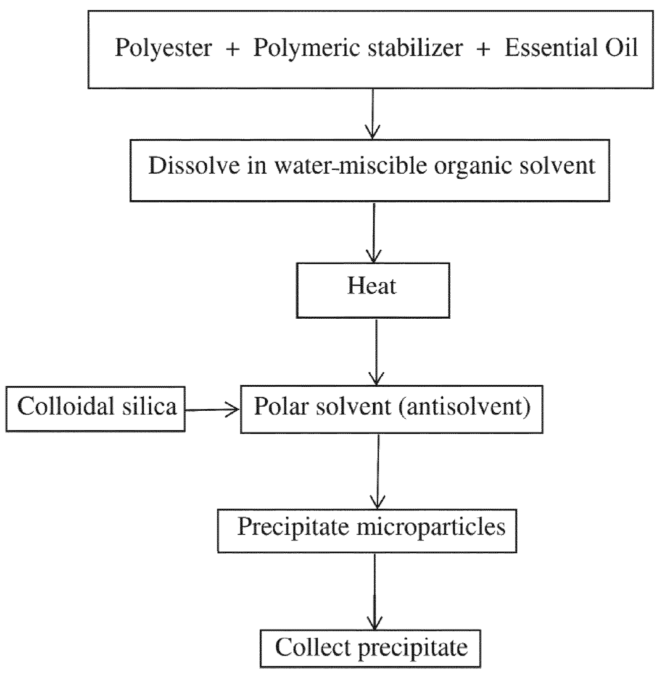


EP 3 705 509 A1

## Description

Essential oils (EOs) are known for use in a number of applications, including as flavoring agents, preservatives, cosmetics, antimicrobial agents, and insecticides. Plants naturally contain EO compounds to protect themselves from phytophagous (plant eating) insects, as these compounds have a high vapor toxicity to insects. EO compounds such as orange oil and oil of lemon eucalyptus have been gaining in popularity as insect repellants as an alternative to N,N-diethyl-meta-toluamide (DEET), which is present in many insect repellents currently on the market but has been found to be harmful to brain and nervous system function.

Essential oils have been prepared for use in cosmetic and pharmaceutical applications through microencapsulation, mainly coacervation. EOs have also been produced as microparticles in spray dried form, though such particles lack uniformity and can only handle low oil loading levels. Microparticles used in coatings are typically made by mixing a plastic resin with a pigment or other additive, melt extruding the mixture, and then pulverizing or grinding it to form a powder, but such methods are not well suited to use with essential oils due to their high volatility.

It is desired to provide powder coatings which confer the benefits of essential oils, such as repelling insects and conferring antimicrobial, antioxidant, and/or antiinflammatory activity. It is further desired to provide functional powder coatings containing essential oils made by an environmentally-sound process.

The above desired properties can be obtained with the present powder coating composition, which includes spherical microparticles formed from a polymer material that have one or more essential oil compounds incorporated in the polymer. The essential oil compounds are organic compounds which are liquid at room temperature, soluble in organic solvents, insoluble in water, and can be extracted from plants by steam distillation, dry distillation, or mechanical processing without heating, as well as isomers thereof and derivatives made by esterification, hydrogenation, or hydration. The essential oil compounds can be included in these microparticles in amounts of between about 0.01% and about 20% by weight of the microparticles. The microparticles themselves can have an average particle size of between about 0.01 microns and about 100 microns and a circularity of between about 0.93 and about 0.999.

The present microparticles can be produced by combining an amorphous polyester resin, a polymeric stabilizer comprising a water-soluble polymer, and the one or more essential oils, and then dissolving the polyester resin and polymeric stabilizer into a water-miscible organic solvent together with the essential oils to form a first fluid mixture. A polar solvent is added to this first fluid mixture at a predetermined rate to form a second fluid mixture comprising precipitated microparticles, and the precipitated microparticles are then collected.

In use, the present microparticles can be applied to a substrate to form an insect-repellant coating on the substrate. The microparticles are applied to a surface of the substrate, such as with an electrostatic powder coating applicator, and the applied coating is then cured on the substrate.

Figure 1 is a diagram illustrating the steps of an embodiment of the present process for making essential oil-containing microparticles.

Figure 2 is a scanning electron microscope (SEM) image (micrograph) of a sample produced according to the present process (**Batch 1**).

Figure 3 is a scanning electron microscope (SEM) image (micrograph) of another sample produced according to the present process (**Batch 2**).

## Definitions

As used herein, the following terms and variations thereof have the meanings given below, unless a different meaning is clearly intended by the context in which such term is used.

"About" and "approximately" refer to a quantity within 10% of the referenced quantity, unless the circumstances of such usage would indicate a different meaning.

"Aspect ratio" refers to a dimensionless quantity used in image analysis and microscopy to numerically describe the shape of a particle independent of its size. The aspect ratio ($A_R$) of particles in a sample is defined by the following formula:

$$A_R = \frac{d_{min}}{d_{max}}$$

where $d_{max}$ is the largest diameter of a particular particle in a sample $d_{min}$ is the smallest diameter of the particle orthogonal to $d_{max}$. In measurements using imaging, the aspect ratio can be expressed as the ratio of the width (the maximum observed particle dimension) to the height (the minimum observed particle dimension orthogonal to the width) of an image of a particle. An aspect ratio of 1 could thus represent a circle or a square, while a line has an aspect ratio close to 0.

"Circularity" refers to the circumference of a circle of equivalent area divided by the actual perimeter of a central cross-section of a particle. The more spherical a particle is, the closer the circularity is to 1, while the more elongated or rough-edged a particle is, the lower the circularity will be.

"Contemporaneously" refers to the performance of a particular action or step of a process during the same period of time as another action or step, or within a predetermined period of time before or after the other action or step, where performance of the particular action or step within the predetermined period of time does not adversely affect the final result of the process.

"Essential oil" and "EO" refer to a material consisting entirely or essentially of one or more organic compounds which is liquid at room temperature, is soluble in organic solvents, is insoluble in water, and can be extracted from plants by steam distillation, dry distillation, or a suitable mechanical process without heating. Essential oils include synthetically produced versions of such compounds, as well as isomers thereof and derivatives made by esterification, hydrogenation, or hydration.

"Microparticle," for purposes of the present composition, refers generally to particles that have particle sizes in the range of from about 1 to about 500 microns, for example from about 50 to about 300 microns, from about 70 to about 270 microns, or from about 100 to about 220 microns.

"Organic solvent" refers to a liquid material comprising primarily one or more organic compounds.

"Particle size" refers to the diameter of a sphere that has the same volume or surface area as a given particle.

"Pest" as used herein refers to a land-dwelling invertebrate, generally an arthropod such as an insect or arachnid, for example a mosquito, fly, spider, tick, or flea.

"Powder" refers to a material composed primarily of a number of loose solid particles capable of flowing, such that particles of the powder material are able to move with respect to each other.

"Resin" refers to a noncrystalline polymer material, typically one which is a solid or viscous liquid at room temperature.

"Spherical" refers to a shape which is generally spherical, i.e. to have a central cross section which has a circularity of between about 0.93 and about 0.999. A composition consisting primarily of spherical particles will be understood to be heterogeneous and to include particles which are ovoid or comprise other shapes.

"Substrate" refers to an article or layer onto which the present powder coating is applied.

The term "comprise" and variations of the term, such as "comprising" and "comprises," are not intended to exclude other additives, components, integers or steps. The terms "a," "an," and "the" and similar referents used herein are to be construed to cover both the singular and the plural unless their usage in context indicates otherwise. Ranges which are described as being "between" two values include the indicated values.

**Materials for Preparation of Essential Oil Microparticles**

A process for preparing the present essential oil-containing microparticle composition for use in powder coating applications is generally described in Figure 1. This process involves the creation of a first solution by dissolving a polyester resin and a polymeric stabilizer in a water-miscible organic solvent together with the essential oil, and then adding a polar solvent as an antisolvent to precipitate the EO-containing microparticles.

Essential oils ("EOs") are organic compounds which are liquid at room temperature, soluble in organic solvents, insoluble in water, and can be extracted from plants by steam distillation, dry distillation, or a suitable mechanical process without heating. Essential oils are usually separated from the aqueous phase by a physical process that does not significantly affect their composition. Typically, essential oils are less dense than water (i.e., a density of less than 1) and have relatively low molecular weights, e.g. of less than about 300. Although the boiling points of essential oils are generally in the range of about 150°C to about 225°C, they are generally sufficiently volatile at room temperature to produce a distinctive odor. In addition, in the presence of water, the boiling points of EOs are reduced, and they can generally be volatilized at temperatures close to 100°C at atmospheric pressure, such as in the presence of or when combined with steam or boiling water. EOs are generally soluble in organic solvents such as alcohols, acetones, ketones, ethers, and aldehydes.

Essential oils can be found in a variety of plants, in particular plants in the following families: Apiaceae, Asteraceae, Cupressaceae, Lamiaceae, Lauraceae, Myrtaceae, Pinaceae, Piperaceae, Santalaceae, Cardiopteridacea (citronella), Rutaceae (citrus), Annonaceae, Labiatae (mint, lavender, thyme, rosemary) and Zingiberaceae. Essential oils such as oil of wintergreen (methyl salicylate) can also be found in plants in the following families: Ericaceae (e.g., the genus Gaultheria), Betulaceae (e.g., the genus Betula), Rosaceae (e.g., the genus Spiraea), and Polygalaceae (e.g., the genus Polygala). Some plants in the Poaceae family, in particular from the genus Cymbopogon such as lemon grass, also contain essential oils. EOs can be found in various parts of a plant, such as in flowers, fruits, seeds, leaves, stems, rhizomes, bark, wood, and/or roots. The plant raw material used to produce an EO can be fresh, wilted, dry, whole, bruised or powdered, except for fruits from the Citrus genus that must be processed fresh.

EOs often contain a number of different compounds. An EO obtained from aerial parts of the Gaultheria procumbens shrub, for example, contains 18 volatile constituents, of which seven are monoterpenes (19.5%) and eleven non-terpenic constitutents (80.5%). GC-MS analysis showed that methyl salicylate (61.14%) was the main volatile constituents of the isolated volatile oil. Examples of essential oil compositions include wintergreen oil, rosemary oil, pine oil, neem oil, eucalyptus oil, citronella oil, tea tree oil, peppermint oil, mustard oil, lemongrass oil, geranium oil, garlic oil, and catnip.

Most EOs are terpenoid or phenylpropanoid compounds, and may be aliphatic, cyclic, or aromatic. A variety of terpenoids, such as compounds derived from monoterpenes and sesquiterpenes, can be extracted from plants and used as essential oils in the present composition. Examples of such compounds are included in Table 1 below.

**Table 1. Examples of Essential Oils**

| Name | Chemical Structure |
|---|---|
| cintronellal | 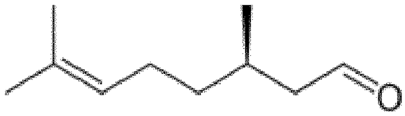 |
| citronellol | 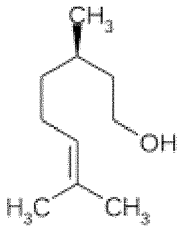 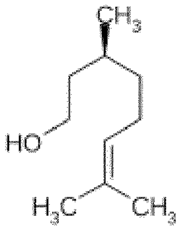 |
| limonene | 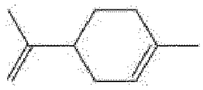 |
| myrcene | 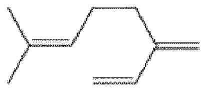 |
| phellandrene | 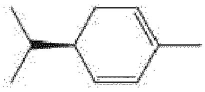 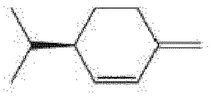 |
| pinene | 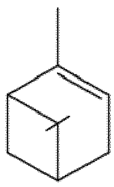 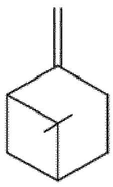 |
| ocimene | 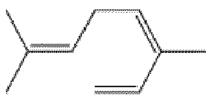 |
| sabinene | 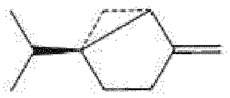 |

(continued)

| Name | Chemical Structure |
|---|---|
| terpinene | 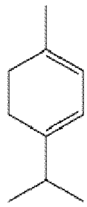 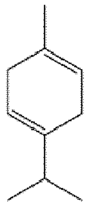 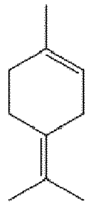 |
| selinene | 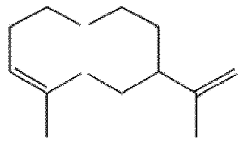 |
| terpineol | 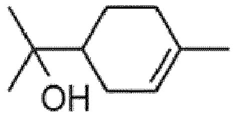 |
| linalol | 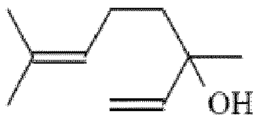 |
| ascaridol | 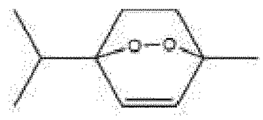 |
| eucalyptol (cineol) | 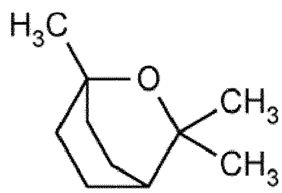 |
| menthol | 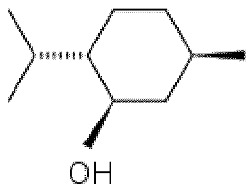 |
| bisabolol | 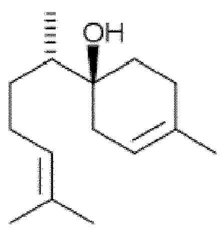 |
| thymol | 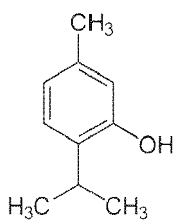 |

(continued)

| Name | Chemical Structure |
|---|---|
| carvacrol | 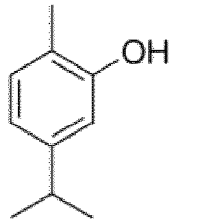 |
| eugenol | 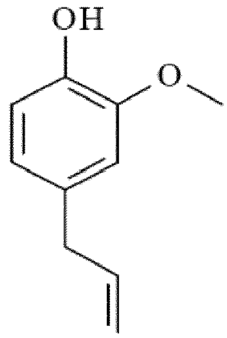 |
| safrol | 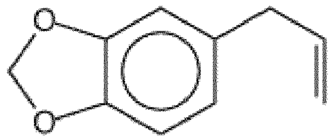 |
| santalol | 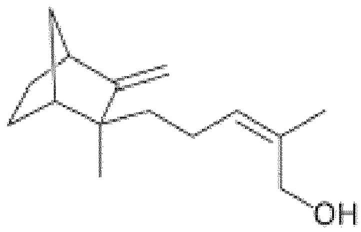 |
| apiol | 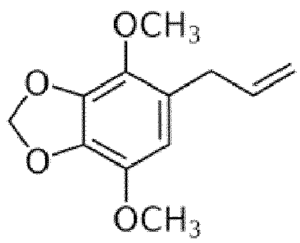 |
| anetol | 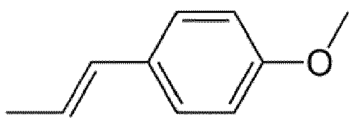 |
| metilchavicol | 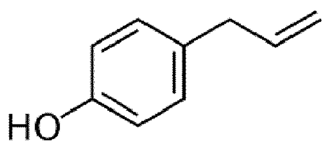 |

(continued)

| Name | Chemical Structure |
|---|---|
| estragol | 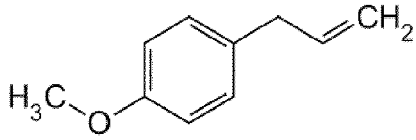 |
| geraniol | 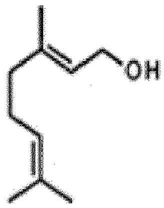 |
| geranial (part of citral) | 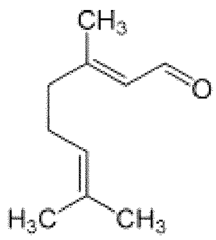 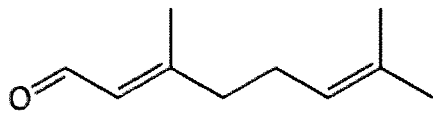 |
| nerol | 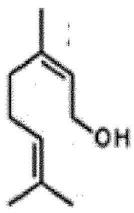 |
| neral (part of citral) | 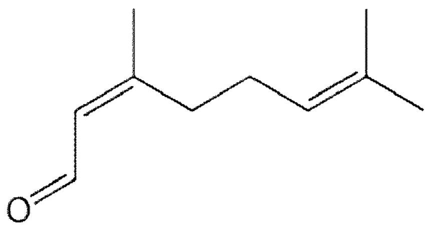 |
| camphor | 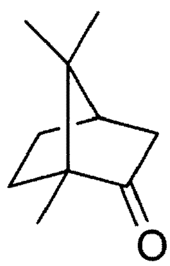 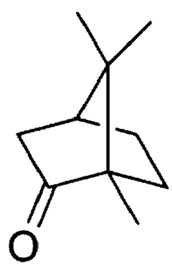 |

(continued)

| Name | Chemical Structure |
|---|---|
| thuyone | 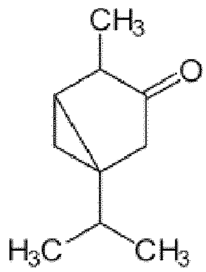 |
| carvone | 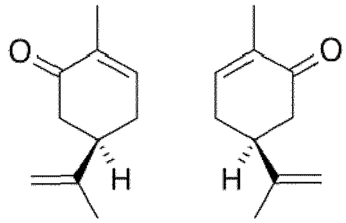 |
| pulegone | 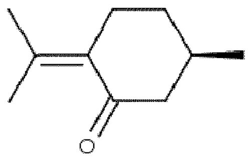 |
| Oil of Wintergreen (methyl salicylate) | 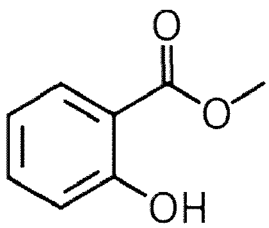 |
| bornile acetate | 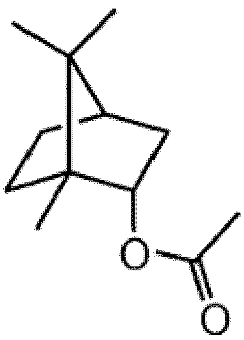 |
| borneol | 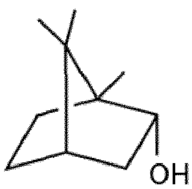 |

(continued)

| Name | Chemical Structure |
|---|---|
| linalile acetate | 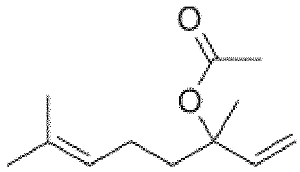 |
| cedryl acetate | 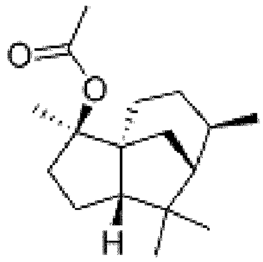 |
| sinensal | 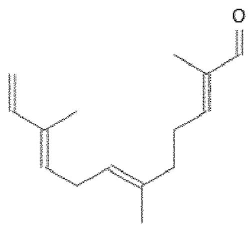 |
| cinnamaldehyde | 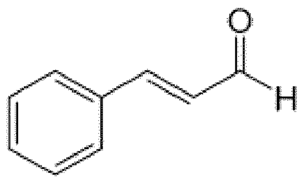 |
| diallyl sulfide | 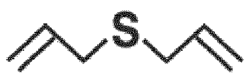 |
| diallyl disulfide | 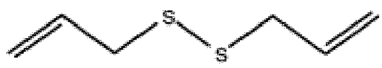 DADS 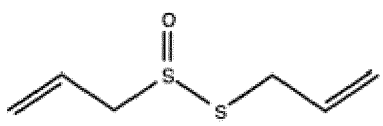 DADSO |
| diallyl trisulfide | 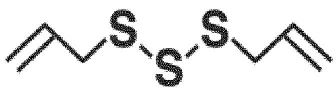 |
| nepetalactone | 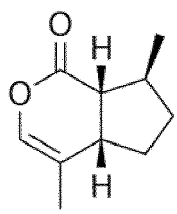 |

(continued)

| Name | Chemical Structure |
|---|---|
| bisbolane | 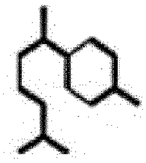 |
| elemane | 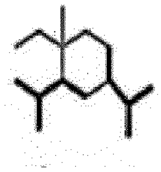 |
| termacrane | 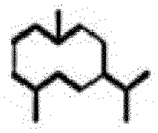 |
| humulcne | 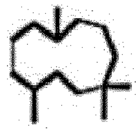 |
| bergamotane | 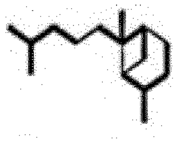 |
| cadinane | 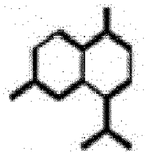 |
| eudesmane | 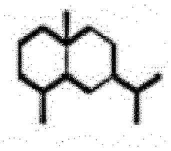 |
| eremophilane | 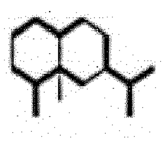 |
| guaiane | 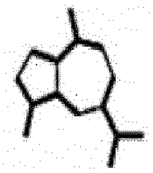 |

(continued)

| Name | Chemical Structure |
|---|---|
| daucane | 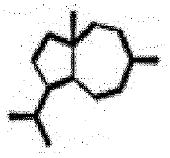 |
| himalachane | 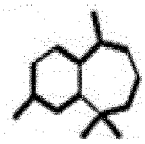 |
| caryophyllene | 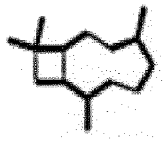 |
| chamigrane | 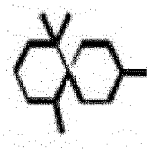 |
| cupranane | 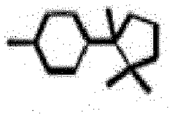 |
| copaane | 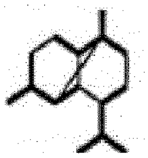 |
| patchoulane | 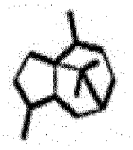 |
| aromadendrane | 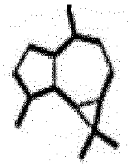 |
| bourbonane | 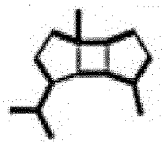 |

(continued)

| Name | Chemical Structure |
|---|---|
| silphiperfolane | 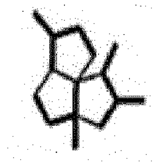 |
| cedreane | 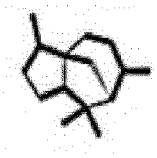 |
| seychellane | 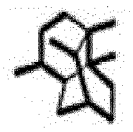 |

Essential oils can be obtained in ways known to the art, such as the methods detailed in the European Pharmacopoeia (e.g., Ph. Eur., 9th Edition), namely steam distillation, dry distillation, and mechanical processes. Other methods can also be used, such as methods which use liquid carbon dioxide or microwaves to extract EOs.

In a steam distillation method, the essential oil is produced by the passage of steam through the plant raw material in a suitable apparatus. The steam can be introduced from an external source or generated by boiling water below the raw material, or by boiling water in which the raw material is immersed. The steam and oil vapors are condensed, and the water and essential oil are then separated by decantation.

In one method of steam distillation, plant materials are placed on a perforated base or sieve at a predetermined distance over a distilling tank. The tank contains water at a level less than the depth of the sieve which is heated. The steam flows at a low pressure and penetrates the vegetable matter, for example for 3-4 hours. The component parts volatilize and are then condensed in a refrigeration tube and collected in a flask where water and oil are separated due to difference in density.

In dry distillation methods, the essential oil is produced by high-temperature heating of stems or bark in a suitable apparatus without the addition of water or steam. Mechanical processes for obtaining essential oils generally use a mechanical device without any heating, also known as cold-pressing. Mechanical processes are usually applied to citrus fruits and involve the expression of the essential oil from the pericarp and subsequent separation by physical means. Conventional cold-pressing methods apply abrasive action to the entire surface of a fruit under a stream of water. After removal of solid waste, the essential oil is separated from the aqueous phase by centrifugation.

A further method for extracting EOs involves extraction using organic solvents. These penetrate the vegetable matter and dissolve the EOs, which are then evaporated and concentrated at low temperature. Then the solvent is eliminated, leaving only the desired fraction. An alternative is extraction using gases in super-critical conditions. Gases (usually $CO_2$) at a temperature and pressure above their critical points are used.

Following extraction, essential oil materials are generally further processed in order to remove impurities and/or obtain a desired fraction of the extracted material. Techniques known to the art can be employed, such as fractionation and filtration. The identity of the compounds contained in the extracted material can be determined using methods known to the art, such as gas chromatography on polar, apolar or chiral stationary phases, mass spectrometry, and/or Fourier transform infra-red (FTIR) detection.

The polyester used in the present process for producing an EO microparticle composition is a branched or linear amorphous polyester resin. The amorphous polyester resin can be formed by reacting a diol with a diacid in the presence of an optional catalyst. Examples of diacids or diesters including vinyl diacids or vinyl diesters utilized for the preparation of amorphous polyesters include dicarboxylic acids or diesters such as terephthalic acid, phthalic acid, isophthalic acid, fumaric acid, dimethyl fumarate, dimethyl itaconate, cis, 1,4-diacetoxy-2-butene, diethyl fumarate, diethyl maleate, maleic acid, succinic acid, itaconic acid, succinic acid, succinic anhydride, dodecylsuccinic acid, dodecylsuccinic anhydride, glutaric acid, glutaric anhydride, adipic acid, pimelic acid, suberic acid, azelaic acid, dodecane diacid, dimethyl terephthalate, diethyl terephthalate, dimethylisophthalate, diethylisophthalate, dimethylphthalate, phthalic anhydride, diethylphthalate, dimethylsuccinate, dimethylfumarate, dimethylmaleate, dimethylglutarate, dimethyladipate, dimethyl

dodecylsuccinate, and combinations thereof. The diacid or diester can be present, for example, in an amount of from about 40 to about 60 mole percent of the resin, from about 42 to about 52 mole percent of the resin, or from about 45 to about 50 mole percent of the resin.

Examples of diols which can be utilized in generating the amorphous polyester include 1,2-propanediol, 1,3-propanediol, 1,2-butanediol, 1,3-butanediol, 1,4-butanediol, pentanediol, hexanediol, 2,2-dimethylpropanediol, 2,2,3-trimethylhexanediol, heptanediol, dodecanediol, bis(hydroxyethyl)-bisphenol A, bis(2-hydroxypropyl)-bisphenol A, 1,4-cyclohexanedimethanol, 1,3-cyclohexanedimethanol, xylenedimethanol, cyclohexanediol, diethylene glycol, bis(2-hydroxyethyl) oxide, dipropylene glycol, dibutylene, and combinations thereof. The amount of diol selected can vary, and can be present, for example, in an amount from about 40 to about 60 mole percent of the resin, from about 42 to about 55 mole percent of the resin, or from about 45 to about 53 mole percent of the resin.

Polycondensation catalysts which can be utilized in forming amorphous polyesters for use in the present process include tetraalkyl titanates, dialkyltin oxides such as dibutyltin oxide, tetraalkyltins such as dibutyltin dilaurate, and dialkyltin oxide hydroxides such as butyltin oxide hydroxide, aluminum alkoxides, alkyl zinc, dialkyl zinc, zinc oxide, stannous oxide, or combinations thereof. Such catalysts can be utilized in amounts of, for example, from about 0.01 mole percent to about 5 mole percent based on the starting diacid or diester used to generate the polyester resin.

Examples of amorphous polyester resins which can be used in the present process include, but are not limited to, unsaturated amorphous polyester resins such as poly(propoxylated bisphenol co-fumarate), poly(ethoxylated bisphenol co-fumarate), poly(butyloxylated bisphenol co-fumarate), poly(co-propoxylated bisphenol co-ethoxylated bisphenol co-fumarate), poly(1,2-propylene fumarate), poly(propoxylated bisphenol co-maleate), poly(ethoxylated bisphenol co-maleate), poly(butyloxylated bisphenol co-maleate), poly(co-propoxylated bisphenol co-ethoxylated bisphenol co-maleate), poly(1,2-propylene maleate), poly(propoxylated bisphenol co-itaconate), poly(ethoxylated bisphenol co-itaconate), poly(butyloxylated bisphenol co-itaconate), poly(co-propoxylated bisphenol co-ethoxylated bisphenol co-itaconate), poly(1,2-propylene itaconate), and combinations thereof.

Alkali sulfonated polyester resins can also be useful in some embodiments, such as the metal or alkali salts of copoly(ethylene-terephthalate)-copoly(ethylene-5-sulfo-isophthalate), copoly(propylene-terephthalate)-copoly(propylene-5-sulfo-isophthalate), copoly(diethylene-terephthalate)-copoly(diethylene-5-sulfo-isophthalate), copoly(propylene-diethylene-terephthalate)-copoly(propylene-diethylene-5-sulfoisophthalate), copoly(propylene-butylene- terephthalate)-copoly(propylene-butylene-5-sulfo-isophthalate), copoly(propoxylated bisphenol-A-fumarate)-copoly(propoxylated bisphenol A-5-sulfo-isophthalate), copoly(ethoxylated bisphenol-A-fumarate)-copoly(ethoxylated bisphenol-A-5-sulfo- isophthalate), and copoly(ethoxylated bisphenol-A-maleate)-copoly(ethoxylated bisphenol-A-5-sulfo-isophthalate), wherein the alkali metal is, for example, a sodium, lithium or potassium ion.

The amorphous polyester used in the present process can advantageously have a glass transition temperature of between about 40°C and about 90°C, or between about 45°C and about 75°C. The polyester can also have a melt viscosity of from about 10 to about 1,000,000 Pa·s at about 130°C, or from about 20 to about 100,000 Pa·s at about 130°C. The average molecular weight of the amorphous polyester can also be from about 2,000 to about 25,000, as determined by gel permeation chromatography (GPC) using polystyrene standards. Polyester in powder or particulate form is generally used in the present process, though liquid polyester resin can also be used.

The present process for producing an essential oil microparticle also makes use of a water-soluble polymer as a polymeric stabilizer. Non-limiting exemplary polymeric stabilizers include poly(vinyl acetate), poly(methyl methacrylate), poly(acrylonitrile), poly(dimethylsiloxane), poly(vinyl chloride), poly(ethylene), poly(propylene), poly(lauryl methacrylate), poly(oxyethylene), poly(acrylamide), poly(vinyl alcohol), poly(acrylic acid), poly(methacrylic acid), poly(vinyl pyrrolidone), poly(ethylene imine), poly(vinyl methyl ether), poly(4-vinylpyridine), poly(12-hydroxystearic acid), poly(isobutylene), cis-1:4-poly(isoprene), carboxymethyl cellulose, gelatin, polysorbate 80 (such as TWEEN 80, available from Millipore Sigma/Merck KGaA, Darmstadt, Germany), polysorbate 20 (such as TWEEN 20, available from Millipore Sigma/Merck KGaA, Darmstadt, Germany), hydroxypropylmethylcellulose, copovidone and polyvinylpyrrolidone, polyethyleneglycols (PEG), polymethacrylates, hypromellose acetate succinate, hypromellose phthalate, a polyvinyl caprolactam-polyvinyl acetate-polyethylene glycol graft copolymer such as SOLUPLUS (available from BASF, Ludwigshafen, Germany), polyvinyl acetate phthalate, cellulose acetate phthalate, and combinations thereof.

The forgoing polymers include hydrophilic groups in the backbone of the polymer. The hydrophilic groups can be nonionic, anionic, cationic or amphoteric. Such water-soluble polymers can also be either synthetic (produced by the polymerization of monomers synthesized from petroleum or natural gas), semisynthetic (manufactured by chemical derivatization of natural organic materials such as polysaccharides or cellulose), or natural (materials derived from microbial, plant or animal material such as xanthan gum, pectins, dextran, carrageenan, guar, sodium CMC, hylaluronic acid (HA) and albumin).

Polymeric stabilizers are typically surfactants, which lower surface tension, and/or dispersing agents such as polyelectrolytes and some inorganic salts, which stabilize particles by providing a surface charge (electro-static interaction or electro-steric hindrance). Examples of polyelectrolytes include alkali salts of poly(methyl acrylate) and poly(methyl methacrylate), magnesium and calcium carbonate, calcium phosphate, and aluminum chloride. Other stabilizers include

water soluble, non-micelle-forming polymers such as methyl and ethyl cellulose, poly(vinyl alcohol), gums, alginates, casein, gelatins, starches and nanoparticles such as talc, silicates, clays and bentonites.

Water-Miscible Organic Solvent

The water-miscible organic solvent for use in the present process can be chosen from solvents known in the art. Such organic solvents can form a homogenous mixture with water without separation of liquid phases (e.g., into polar and nonpolar phases) for a predetermined period of time under the conditions of the present process. For example, the solvent can be selected from the group consisting of an alcohol, dimethyl acetamide, acetic acid, diethylene glycol dimethyl ether, dimethyl formamide, 1,4-dioxane, ethylene glycol, hexamethyl phosphoramide, hexamethyl phosphorous triamide, pyridine, water, and combinations thereof.

The water-miscible organic solvent should remain fluid and preferably has a relatively low viscosity under the conditions of the present process in order to avoid impeding the process. The particular water-miscible organic solvent and the amount of this component used in the present process also should be chosen to avoid precipitation of the solvent. Flory-Huggins interaction parameters can be used to evaluate the compatibility of the polymer(s) and water-miscible organic solvent(s) used in the present process. (see, P. van de Witte, et al., Phase separation processes in polymer solutions in relation to membrane formation, J. Membrane Science, 117 (1996)).

Antisolvent

A polar solvent is also used in the present process as an antisolvent to induce precipitation of EO microparticles from solution. Deionized water can be used for example, optionally with other additives such as polyvinyl alcohol. Such additives should be chosen to avoid precipitation of the additives or undesirably increasing the viscosity of the liquid mixture. For example, polyvinyl alcohol having a molecular weight of between about 10,000 and about 100,000 can be used as an additive, typically in an amount of between about 0.01% and about 3% by weight, or between about 0.05% and about 2% by weight. Other aqueous solutions or polar solvents can also be used.

**Process for Preparing Essential Oil Microparticles**

In the present process for preparing an essential oil powder coating, one or more essential oils are combined with polyester and a polymeric stabilizer to form a first fluid mixture. The polyester is preferably in solid form, e.g. powdered or pelletized, and can be combined first with an essential oil material or can alternatively be first dissolved in a solvent before being combined with the essential oil. These components can be combined in a variety of ways with other materials used to prepare the present microparticles, for example prior to contacting them with a water-miscible organic solvent, contemporaneously with the addition of the water-miscible organic solvent, or alternatively the essential oil component can be pre-mixed in the water-miscible organic solvent and then added to the polyester and polymeric stabilizer components. The fluid mixture is an emulsion due to the presence of the essential oil in the mixture.

Essential oils can be included in the present powder coating in amounts of between about 0.01% and about 20% by weight, or between about 0.1% and about 10% by weight, or between about 1% and about 5% by weight based on the total weight of the microparticles produced by the present process. To produce such powder coatings, one or more essential oils should be added to the first fluid mixture in amounts of between about 0.01% and about 20% by weight, or between about 0.1% and about 10% by weight, or between about 1% and about 5% by weight, based on the total weight of the polyester in the first fluid mixture. The essential oil, polyester, and stabilizer components at this stage can be combined in amounts ranging (in parts per hundred) from 2-60 parts essential oil, 50-90 parts polyester, and 8-25 parts stabilizer. In one embodiment, for example, the ratios of essential oil/polyester/stabilizer can be 11:73:16 parts per hundred.

The essential oil, polyester, polymeric stabilizer and water-miscible organic solvent should be heated to a temperature at which the polyester and polymeric stabilizer components are dissolved into the organic solvent to form a first fluid mixture, if a temperature above ambient temperature is required for this. The components of the fluid mixture can be heated after being combined, or alternatively one or more of the components can be heated before being combined with other components of the first fluid mixture. The first fluid mixture can be heated, for example, to a temperature of between about 70°C and about 100°C, or between about 80°C and about 90°C. Processing temperatures in the present process should be maintained the below the boiling points of the essential oils being incorporated into the final microparticle composition.

Following the creation of the first fluid mixture, a polar solvent (antisolvent) is added the first fluid mixture in order to form a second fluid mixture. The antisolvent is preferably added in a metered fashion, i.e. in controlled amounts over a predetermined of time. For example, the antisolvent can be added in dropwise fashion to the first fluid mixture. The second fluid mixture is preferably stirred, agitated, or otherwise being mixed during addition of the antisolvent.

Antisolvent can be added to the first fluid mixture, for example, at rates of 0.5-20 g/min., 1-15 g/min., or 3-10 g/min., for time periods of between 30-120 minutes, 45-90 minutes, or 60-75 minutes. When antisolvent is added at a faster rate, the supersaturation level is higher and smaller particles are formed, while adding antisolvent at a slower rate generally leads to larger particles. Homogeneous mixing also influences the degree of supersaturation of the second fluid mixture, which impacts the nucleation and particle growth rate.

The second fluid mixture can be maintained at temperatures of between about 70°C and about 100°C, or between about 80°C and about 90°C, for a predetermined period of time, for example for between about 15 minutes and about 4 hours following the initiation of antisolvent addition to the first fluid mixture, or for between about 30 minutes and about 2 hours, or for between about 45 minutes and about 1 hour. Following such heating, the second fluid mixture can be allowed to cool, in order to facilitate precipitation.

A nucleating agent can also be added to the in-process liquid mixture in order to facilitate precipitation of the essential oil powder coating product of the present process. The nucleating agent can be added before the addition of the antisolvent, after the addition of the antisolvent, or contemporaneously with the antisolvent. An example of such a nucleating agent is colloidal silica, which can be added after or together with the addition of the antisolvent. Other nucleating agents that can be used include minerals such as chalk, clay, kaolin, talc and silicates, and pigments such as cadmium red, cobalt yellow, then chromium oxide, titanium dioxide, magnesium oxide, carbonates, sulfates, carbon black, salts of carboxylic acids, benzophenone, and some polymers and other organic liquids. Other nucleating agents that can be used include molybdenum disulfide, iron sulfide, titanium dioxide, talc and sodium phenylphosphinate, sodium benzoate boron nitride, aromatic carboxylic acid salts, sodium benzoate, talc and some pigment colorants. Newer nucleating agents that can be used include phosphate ester salts and hyper nucleating agents having faster processing speeds.

In one embodiment, colloidal silica in water is added to the first fluid mixture to pre-nucleate or "pre-seed" the first fluid mixture. In another embodiment, the nucleating agent can be included in the antisolvent. For example, an antisolvent containing up to about 30% by weight colloidal silica can be added to the second fluid mixture. Nucleation affects the reaction speed and the microparticle size and distribution.

Following the addition of antisolvent to the first fluid mixture, a precipitate comprising an essential oil is formed in the second fluid mixture. The particles of this precipitate are separated from the second fluid mixture in ways known to the art, such as by centrifugation. The separated particles can be washed and further centrifuged in order to prepare the final essential oil powder coating, and/or the particles can be subjected to freeze drying in order to prepare the essential oil powder coating.

Spherical particles comprising essential oil such as those produced by the present process were not previously known for use in powder coating applications. The solvent/antisolvent system of the present method allows better control over the properties of such powder coatings, which can be smaller and more spherical than current essential oil powder particles. The final product can be altered by changes to the degree of loading of polymer to essential oil, leading to particles of different concentrations of essential oil in the microparticles of the composition.

The foregoing process is unique to the powder coating industry, in particular the process of making microparticles based on the precipitation of amorphous polyester. Advantageously, essential oils act as emulsifiers during the process of forming microparticles. The infusion of a polymeric material with an essential oil was not previously known, and no prior powder coating contained an essential oil. The ability to fine-tune the size and size distribution of the present microparticles also makes it feasible to produce thinner or thicker coatings as needed on various substrates.

## Essential Oil Microparticles

The present essential oil microparticle composition generally comprises essential oil incorporated within and on the surface of polymeric particles. An advantageous characteristic of the particles of the present essential oil powder coating is that they are generally spherical. This can be seen for example in Figures 2 and 3, which are scanning electron microscope (SEM) images (micrographs) of two samples of microparticles produced according to the present process. Greater sphericity provides improved flow characteristics to the present essential oil-containing powder coating composition and facilitates the application of the composition by an electrostatic powder coating applicator, for example. The spherical nature of the particles of the present essential oil powder coating can be measured by their circularity. These particles can have a circularity of between about 0.93 and about 0.999, between about 0.95 and about 0.995, or between about 0.96 and about 0.990, for example.

Circularity can be determined for example with a Sysmex FPIA-3000 Particle Characterization System or a Sysmex FPIA-2100 Flow Particle Image Analyzer, both available from Malvern Instruments Ltd. (Worcestershire, UK). In flow particle image analysis, a sample is taken from a dilute suspension of particles, and this suspension is then passed through a measurement cell where images of the particles are captured, such as with stroboscopic illumination and a CCD camera. A digital image of each particle is extracted and quantified, such as by identifying particle pixels from background pixels using differences in greyscale levels ("thresholding") and by tracing the perimeters of individual

particles and calculating their areas by edge definition. The particles of the present powder coating composition also advantageously have a narrow particle size distribution (geometric standard deviation or GSD), such as a GSD of between about 1.3 and about 2.0. The size of such particles can be determined by a photographic method, such as through the use of a Particle Image Analyzer as described above, and the GSD can then be calculated using methods known to the art based on such size data. One way to express distribution width is as the span, which can be expressed by the following formula:

$$Span = \frac{D_{v0.9} - D_{v0.1}}{D_{v0.5}}$$

The parameter Dv0.9 [or Dv(90)] signifies the point in the size distribution, up to and including which, 90% of the total volume of material in the sample is contained. A narrow size distribution is better for evenly dispersing the particles from an electrostatic applicator onto a substrate and creating a thin layer of the powder on the substrate surface.

The average size of the particles comprising the present powder coating will vary, depending in part on the size of the essential oil used to form the powder coating, but can be for example between about 0.01 microns and about 100 microns, between about 0.1 microns and about 50 microns, between about 1 micron and about 30 microns, or between about 5 microns and about 15 microns. The average particle size can be the D50, i.e. the size at which half of the particles are larger and half smaller, and can be determined using a Multisizer 3 Coulter Counter made by Beckman Coulter (Indianapolis, IN), for example.

The aspect ratio of particles produced by the present process is preferably in the range of about 1. Preferably, the particles have an aspect ratio of between about 0.93 and about 0.999, between about 0.95 and about 0.995, or between about 0.96 and about 0.990. The average of the aspect ratios of the particles is also preferably between about 0.93 and about 0.999, between about 0.95 and about 0.995, or between about 0.96 and about 0.990. The minimum size of the present pigment particles is preferably between 1 and 200 μm in diameter.

To determine how much essential oil is retained within the particles, thermogravimetric analysis (TGA), mass spectrometry (MS), gas chromatography (GC), GC-flame ionization detection, or gas chromatography-mass spectrometry (GC-MS) can be performed. An individual EO compounds, such as methyl salicylate, can be included in the present microparticles, or the microparticles can be formed from an EO material containing a mixture of essential oils, such as a mixture of between 20 and 60 EO components or more, though usually in plant-derived EO materials usually 2-3 compounds make up the majority of the EO components. In EO compositions that include non-essential oil compounds, the essential oil compounds can be present in concentrations between about 20% and about 70% by weight of the composition or more, for example, with the remaining compounds being present in trace amounts.

The present microparticles are able to contain more essential oil material than prior processes for producing EO particular materials, such as spray draying. This allows the present particle composition to deliver higher amounts of essential oils to a powder coating formed with this composition, thereby providing improved pest repellent properties to such coatings.

## Application and Use of Essential Oil Microparticles in Powder Coatings

The present EO microparticle composition can be applied as a powder coating to a variety of articles and surfaces, including furniture, household items, manufactured goods, and building or other architectural surfaces. Articles used outdoors, where invertebrate pests are more prevalent, for example, are particularly suitable for coating with the present powder coating composition. Patio furniture, lawn and garden equipment, decorative outdoor items, and consumable items such as beverage containers (bottles, cans, and the like) can be advantageously coated with the present composition, for example.

The present powder coating composition can be applied to a surface of a substrate by electrostatic spraying with an electrostatic applicator device. Such devices can make use of tribo or corona charging, for example. During corona charging, a high voltage potential is developed at an electrode located in or near a stream of powder comprising the present composition. The powder particles become negatively charged and are attracted to the grounded substrate. Alternatively, substrates can be coated with the present composition using a fluidized bed, by passing the substrate through an electrically charged cloud of powder comprising the present microparticle composition, or using other techniques known to the art.

The present microparticle composition can be applied in a variety of thicknesses, depending on the particular application for the coating. In applications for items expected to experience significant wear and tear or harsher environmental conditions, coatings can be applied in greater thicknesses, while decorative coatings can be thinner. Decorative coatings are typically applied in thickness of, for example, 0.025 mm to 0.10 mm, such as in thicknesses of from 1.5 to 3.5 mils (0.038 mm - 0.089 mm) or between 2.5 and 3 mils (0.064 mm - 0.076 mm) (with 1 mil = 0.0254 mm). Coatings

which need to be more protective can be thicker, such as from 0.25 mm to 0.76 mm.

Following the application of a layer of the present composition to a substrate, the applied coating layer is heat-cured, for example at a temperature of between about 90°C and about 180°C, or between about 100°C and about 130°C. The ability to cure the present composition at relatively low temperatures saves energy and also prevents degradation or evaporation of the essential oils contained on and within the microparticles of the present composition. Due to the high volatility of most of these essential oils (e.g., Eucalyptus 175 °C, Lavender 204 °C, Tea Tree 165 °C, Citronella 222 °C), the efficacy of the repellent functionality of the powder coated product is preserved. Since the essential oil is infused within the polymeric matrix, normal cleaning of the coated surfaces should not result in any significant loss of the essential oil.

Essential oils have been used in a variety of ways. For example, oils from oregano, rosemary, and sage have been used for food preservation. Such oils can advantageously be used in coatings for items that are intended to come in contact with food, such as food storage containers or items for use in a commercial or household kitchen. Other oils, such as eucalyptus oil, have been identified as having antibacterial activity. Such oils can also be used in coatings for items intended to come in contact with food, as well as with items used in medical or veterinary applications.

Essential oils are known in addition for repelling pests such as insects. Studies have demonstrated that these compounds possess biological activity capable of eliciting adverse effects in arthropod pests. For example, Gaultheria oil (Ericaceae) and Eucalyptus oil (Myrtaceae) are highly effective at killing or repelling insects such as the rice weevil Sitophilus oryzae and the beetles Callosobruchus chinensis (Coleoptera, Bruchidae), S. paniceum, and M. domestica. Eucalyptus saligna (Myrtaceae) oil has similarly been found to kill the following pests within 2 to 30 minutes of contact: Pediculus capitis (head lice), Anopheles funestus (mosquitoes), Cimex lectularius (bed bugs), and Periplaneta orientalis (cockroaches).

Essential oils belonging to plants in the citronella genus (Poaceae) are commonly used as ingredients of plant-based mosquito repellents, such as EOs from the plant Cymbopogon nardus. Other EO mosquito repellant compositions are listed in Table 2 below.

**Table 2. Essential Oils used as Mosquito Repellants**

| Essential Oil | Plant |
|---|---|
| Citronella grass, Lemon grass | *Cympobogon spp., Cymbopogon citratus, Cymbopogon martini* |
| Eucalyptus oil | *Eucalyptus citriodora* |
| Geranium | *Pelargonium citrosum* |
| Peppermint | *Mentha piperita* |
| Holy Basil | *Ocimum spp* |
| Toothache Tree | *Zanthoxylum limonella* |
| Kakronda | *Blumea lacera* |
| Neem | *Azadirachta indica* |

## Examples

### Example 1: Essential Oil Microparticle Preparation Process

Into a 1L, three-necked round bottom flask was added 55 grams of polyester resin and 12 grams of polyvinyl alcohol (27K, PVA) in dimethyl acetamide (DMAc, 372.8 grams, water miscible, high boiling solvent). Mixing at about 300 rpm was started to start dissolving the polymers. While still at ambient temperature (23°C), about 14 grams of Wintergreen Essential Oil (methyl salicylate) was added to the flask. The polymer/oil solution was heated up to 90°C and a solution of PVA in deionized water (6.45 grams 27K PVA in 225.6 grams DIW, deionized water) was added dropwise to the flask with a metering pump (Fluid Metering, Inc.) while stirring at 370 RPM. After about 10 minutes of adding the aq. PVA solution, the solvent solution went from clear light yellow to a white opaque. After about 1.5 hours the aqueous PVP solution was all added and the addition of colloidal silica (37.9 grams, 30 wt.%, aqueous, LUDOX AM available from W.R. Grace, Columbia, MD) was begun by drop funnel. Within 12 minutes all the colloidal silica was added. The heating was stopped within 10 minutes. The opaque solution was left to cool and left stirring overnight at 300 RPM. The next day, the solution was transferred to a 1L centrifuge bottle and centrifuged at 3000 RPM for 15 minutes to remove the DMAc/DIW mixture. The particles were resuspended in DIW and mixed by shaking for about 30 seconds before centrifuging again at 3000 RPM for 15 minutes. This wash/centrifuge procedure was repeated one more

time before concentrating the microparticles and transferring them to a freeze-drier bottle. The particle slurry was rapidly frozen and then placed on freeze drier which subjected the bottled particles to a high vacuum that removes ice by sublimation.

The particles were submitted for thermogravimetry and gas chromatographic analysis to ensure the presence of the essential oil additive. Table 3 below shows a summary of the particle composition of four batches of the present microparticles.

**Table 3. Composition of Essential Oil Microparticles**

| Particle Formulation | Batch 1 | Batch 2 | Batch 3 | Batch 4 |
|---|---|---|---|---|
| Ratio of low to high molecular weight polyester | 1:1 | 0:1 | 0:1 | 0:1 |
| Type of Essential Oil | Wintergreen | Wintergreen | Wintergreen | Citronella |
| % Oil in Particles (as detected by Gas Chromatography) | 5.0% | 4.9% | 5.9% | 6.6% |
| Pigment (wt. %) Carbon Black | None added | None added | 9.50% | None added |
| ppm Silicon (as detected by Inductively Coupled Plasma) | None added | 66.4 | 536.6 | 222.1 |
| Particle size range | 0.5 - 5.5 μm | 14 - 33 μm | potato-shaped 5 - 50 μm | TBD spherical 1 -10 μm |

Although the present invention has been described in considerable detail with reference to certain preferred embodiments, other embodiments are possible. The steps disclosed for the present methods, for example, are not intended to be limiting nor are they intended to indicate that each step is necessarily essential to the method, but instead are exemplary steps only. Therefore, the scope of the appended claims should not be limited to the description of preferred embodiments contained in this disclosure.

Recitation of value ranges herein is merely intended to serve as a shorthand method for referring individually to each separate value falling within the range. Unless otherwise indicated herein, each individual value is incorporated into the specification as if it were individually recited herein. All references cited herein are incorporated by reference in their entirety.

## Claims

1. A composition comprising spherical microparticles for use as a powder coating, the microparticles comprising a polymer material with one or more essential oil compounds incorporated therein in an amount of between about 0.01% and about 20% by weight of the microparticles, wherein the microparticles have an average particle size of between about 0.01 microns and about 100 microns and a circularity of between about 0.93 and about 0.999, and wherein the essential oil compounds are organic compounds which are liquid at room temperature, soluble in organic solvents, insoluble in water, and can be extracted from plants by steam distillation, dry distillation, or mechanical processing without heating, including isomers thereof and derivatives made by esterification, hydrogenation, or hydration.

2. The composition of claim 1, wherein the one or more essential oil compounds are selected from the group consisting of cintronellal, citronellol, limonene, myrcene, phellandrene, pinene, ocimene, sabinene, terpinene, selinene, terpineol, linalol, ascaridol, eucalyptol, menthol, , bisabolol, thymol, carvacrol, eugenol, safrol, santalol, apiol, anetol, metilchavicol, estragol, geraniol, geranial, nerol, neral, camphor, thuyone, carvone, pulegone, methyl salicylate, bornile acetate , borneol, linalile acetate, cedryl acetate, sinensal, cinnamaldehyde, diallyl sulfide, diallyl disulfide, diallyl trisulfide, nepetalactone, bisbolane, elemane, termacrane, humulcne, bergamotane, cadinane, eudesmane , eremophilane, guaiane, daucane, himalachane, caryophyllene, chamigrane, cupranane, copaane, patchoulane, aromadendrane, bourbonane , silphiperfolane, cedreane, and seychellane.

3. The composition of claim 1, wherein the one or more essential oil compounds comprise a terpenoid or phenylpropanoid compound.

4. The composition of claim 1, wherein the one or more essential oil compounds comprise a monoterpene or a sesquiterpene compound.

5. The composition of claim 1, wherein the one or more essential oil compounds can be extracted from a plant from a family selected from the group consisting of Apiaceae, Asteraceae, Cupressaceae, Lamiaceae, Lauraceae, Myrtaceae, Pinaceae, Piperaceae, Santalaceae, Cardiopteridacea, Rutaceae, Annonaceae, Labiatae and Zingiberaceae.

6. The composition of claim 1, wherein the one or more essential oil compounds can be extracted from a plant from a genus selected from the group consisting of Gaultheria, Betula, Spiraea, Polygala, and Cymbopogon.

7. The composition of claim 1, wherein the microparticles have a geometric size distribution of between about 1.3 and about 2.0.

8. The composition of claim 1, wherein the microparticles have a circularity of between about 0.96 and about 0.99.

9. The composition of claim 1, wherein the microparticles have an average particle size of between about 0.1 microns and about 50 microns.

10. The composition of claim 1, wherein the one or more essential oil compounds are produced synthetically.

11. A process for producing a composition comprising spherical microparticles containing one or more essential oils, comprising the steps of:

providing an amorphous polyester resin, a polymeric stabilizer comprising a water-soluble polymer, and the one or more essential oils;
dissolving the polyester resin and polymeric stabilizer into a water-miscible organic solvent together with the essential oils to form a first fluid mixture;
adding a polar solvent to the first fluid mixture at a predetermined rate, thereby forming a second fluid mixture comprising precipitated microparticles;
collecting the precipitated microparticles.

12. The method of claim 11, further comprising the step of adding silica to the first or second fluid mixture.

13. The method of claim 11, wherein the polyester resin, the polymeric stabilizer, and the essential oils are added together before being placed in contact with the water-miscible organic solvent.

14. The method of claim 11, wherein:

(a) the polymeric stabilizer is selected from the group consisting of polyvinyl acetate, poly(methyl methacrylate), poly(acrylonitrile), poly(dimethylsiloxane), polyvinyl chloride, polyethylene, polypropylene), poly(lauryl methacrylate), poly(oxyethylene), poly(acrylamide), poly(vinyl alcohol), poly(acrylic acid), poly(methacrylic acid), polyvinyl pyrrolidone), polyethylene imine), poly(vinyl methyl ether), poly(4-vinylpyridine), poly(12-hydroxystearic acid), poly(isobutylene), cis-1:4-poly(isoprene), carboxymethyl cellulose, gelatin, polysorbate 80, polysorbate 20, hydroxypropylmethylcellulose, copovidone and polyvinylpyrrolidone, polyethyleneglycols (PEG), polymethacrylates, hypromellose acetate succinate, hypromellose phthalate, polyvinyl caprolactam-polyvinyl acetate-polyethylene glycol graft copolymer, polyvinyl acetate phthalate, cellulose acetate phthalate, and combinations thereof;
(b) the water miscible organic solvent is selected from the group consisting of dimethyl acetamide, acetic acid, diethylene glycol dimethyl ether, dimethyl formamide, 1,4-dioxane, ethylene glycol, hexamethyl phosphoramide, hexamethyl phosphorous triamide, pyridine, water, and combinations thereof; and
(c) the polyester resin is selected from the group consisting of poly(propoxylated bisphenol co-fumarate), poly(ethoxylated bisphenol co-fumarate), poly(butyloxylated bisphenol co-fumarate), poly(co-propoxylated bisphenol co-ethoxylated bisphenol co-fumarate), poly(1,2-propylene fumarate), poly(propoxylated bisphenol co-maleate), poly(ethoxylated bisphenol co-maleate), poly(butyloxylated bisphenol co-maleate), poly(co-propoxylated bisphenol co-ethoxylated bisphenol co- maleate), poly(1,2-propylene maleate), poly(propoxylated bisphenol co-itaconate), poly(ethoxylated bisphenol co-itaconate), poly(butyloxylated bisphenol co-itaconate), poly(co-propoxylated bisphenol co-ethoxylated bisphenol co-itaconate), poly(1,2-propylene itaconate), and combinations thereof.

**15.** The method of claim 11, wherein the polyester resin has a glass transition temperature of between about 45°C and about 75°C.

**16.** The method of claim 11, wherein the second fluid mixture is heated to a temperature of between about 70°C and about 100°C.

**17.** A method of forming an insect-repellant coating on a substrate, comprising:

applying the composition of claim 1 to the substrate with an electrostatic powder coating applicator; and
curing the composition on the substrate.

**18.** The method of claim 17, wherein the coating is electrostatically transferred to the substrate through tribo or corona charging.

**19.** The method of claim 17, wherein the substrate is an item of furniture.

# Figure 1

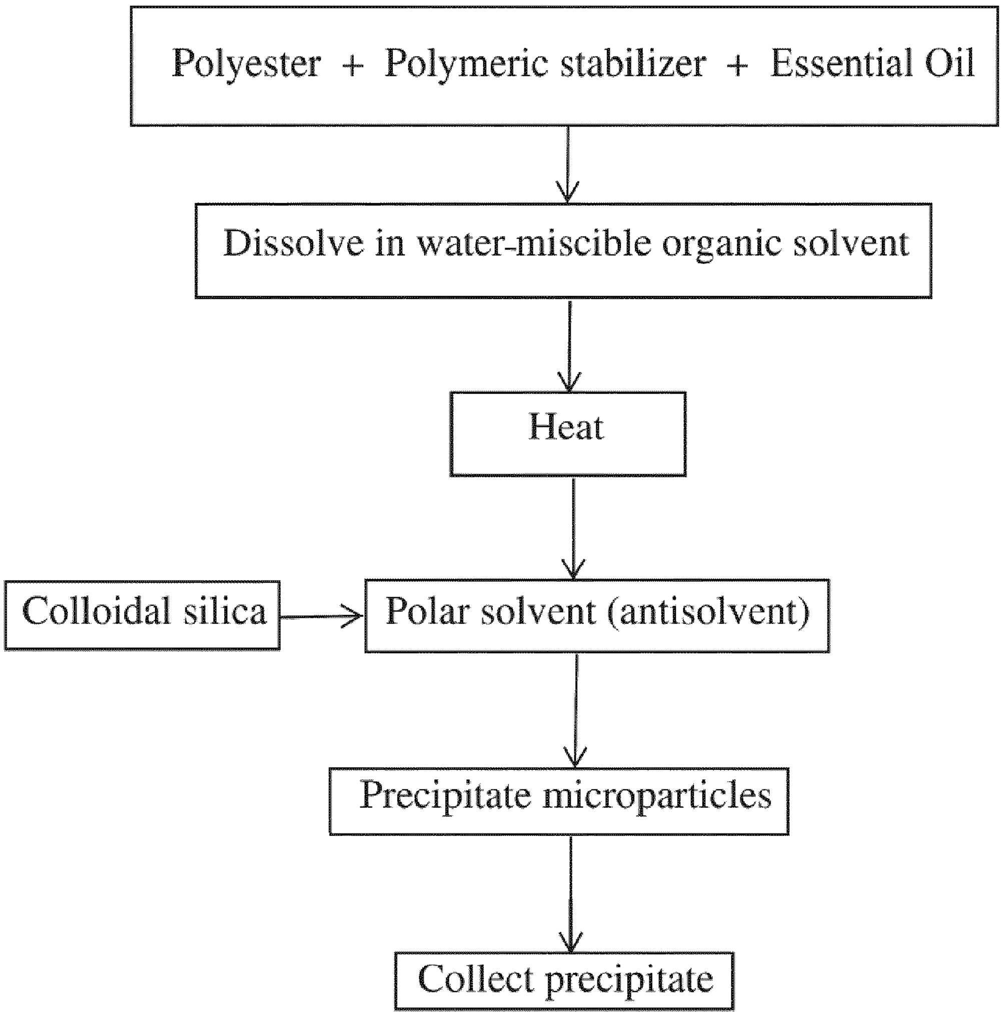
Polyester + Polymeric stabilizer + Essential Oil
Dissolve in water-miscible organic solvent
Heat
Colloidal silica
Polar solvent (antisolvent)
Precipitate microparticles
Collect precipitate

Figure 2

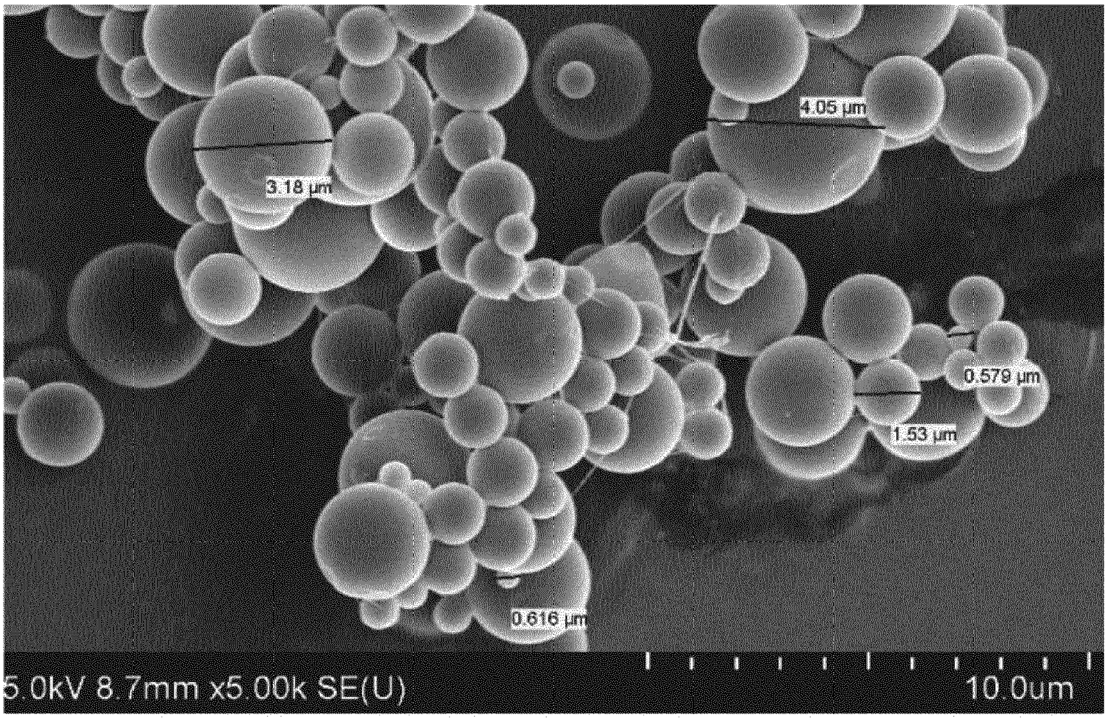

Figure 3

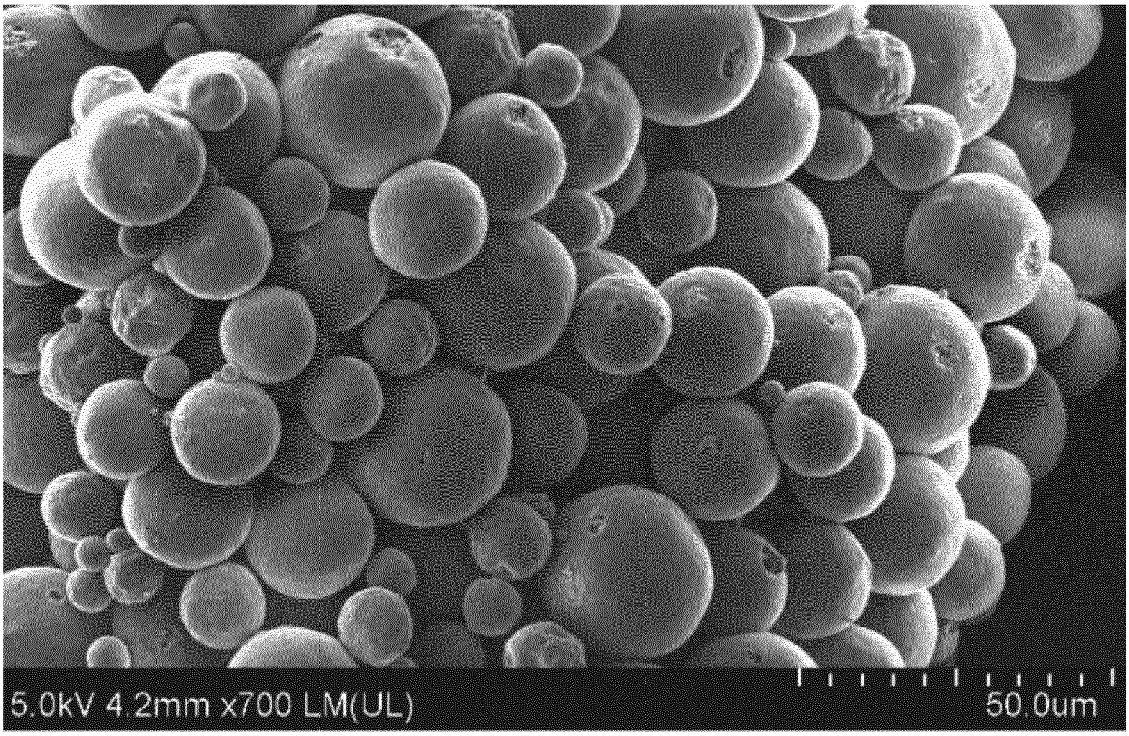

Europäisches Patentamt
European Patent Office
Office européen des brevets

# EUROPEAN SEARCH REPORT

Application Number
EP 20 16 0802

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 2 296 046 A1 (XEROX CORP [US]) 16 March 2011 (2011-03-16)<br>* claim 9; examples 2, 3, 5, 6-10; table 1 * | 1,8,9<br>2-7, 10-19 | INV.<br>C08J3/14<br>C08K3/36<br>C08K5/01<br>C08K5/05<br>C08K5/06<br>C08K5/101<br>C08K5/13<br>C09D5/03<br>C09D7/61<br>C09D7/63<br>C09D167/00 |
| A | EP 1 698 944 A1 (SANYO CHEMICAL IND LTD [JP]) 6 September 2006 (2006-09-06)<br>* claims 11, 20; examples 1-4, 31, 32 * | 1-19 | |
| A | WO 2018/065481 A1 (BASF SE [DE]) 12 April 2018 (2018-04-12)<br>* claims 27, 28; examples 1, 21; tables 1, 4 * | 1-19 | |
| A | CHOI M J ET AL: "Physical and light oxidative properties of eugenol encapsulated by molecular inclusion and emulsion-diffusion method", FOOD RESEARCH INTERNATIONAL, ELSEVIER, AMSTERDAM, NL, vol. 42, no. 1, 1 January 2009 (2009-01-01), pages 148-156, XP025769659, ISSN: 0963-9969, DOI: 10.1016/J.FOODRES.2008.09.011 [retrieved on 2008-10-10]<br>* page 149, left-hand column, line 16 - page 156, left-hand column, line 2; figures 2, 4E, 4F; tables 1-4 * | 1-19 | TECHNICAL FIELDS SEARCHED (IPC)<br>C09D<br>C08J<br>A61K<br>C09G<br>C08K |

The present search report has been drawn up for all claims

1

| Place of search | Date of completion of the search | Examiner |
|---|---|---|
| The Hague | 22 July 2020 | Enescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 16 0802

This annex lists the patent family members relating to the patent documents cited in the above-mentioned European search report. The members are as contained in the European Patent Office EDP file on
The European Patent Office is in no way liable for these particulars which are merely given for the purpose of information.

22-07-2020

| Patent document cited in search report | Publication date | Patent family member(s) | Publication date |
|---|---|---|---|
| EP 2296046 A1 | 16-03-2011 | BR PI1003593 A2 | 08-01-2013 |
| | | CA 2714342 A1 | 15-03-2011 |
| | | EP 2296046 A1 | 16-03-2011 |
| | | JP 5624412 B2 | 12-11-2014 |
| | | JP 2011065155 A | 31-03-2011 |
| | | US 2011065038 A1 | 17-03-2011 |
| EP 1698944 A1 | 06-09-2006 | EP 1698944 A1 | 06-09-2006 |
| | | EP 2328034 A1 | 01-06-2011 |
| | | EP 2328035 A1 | 01-06-2011 |
| | | KR 20060114341 A | 06-11-2006 |
| | | KR 20070092315 A | 12-09-2007 |
| | | US 2007281235 A1 | 06-12-2007 |
| | | US 2011195356 A1 | 11-08-2011 |
| | | US 2011200931 A1 | 18-08-2011 |
| | | WO 2005057293 A1 | 23-06-2005 |
| WO 2018065481 A1 | 12-04-2018 | BR 112019006570 A2 | 02-07-2019 |
| | | CN 109906114 A | 18-06-2019 |
| | | EP 3523021 A1 | 14-08-2019 |
| | | JP 2019534784 A | 05-12-2019 |
| | | US 2019231659 A1 | 01-08-2019 |
| | | WO 2018065481 A1 | 12-04-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- European Pharmacopoeia
- **P. VAN DE WITTE et al.** Phase separation processes in polymer solutions in relation to membrane formation. *J. Membrane Science,* 1996, vol. 117